# EUROPÄISCHE PATENTSCHRIFT

(11) **EP 0 498 162 B1**
(45) Veröffentlichungstag und Bekanntmachung des Hinweises auf die Patenterteilung: **27.12.1995**
(21) Anmeldenummer: 92100412.3
(22) Anmeldetag: 13.01.1992
(51) Int. Cl.: A01N 55/08

(54) **Insektizide Mittel**
Insecticidal agent
Agent insecticide

(30) Priorität: 02.02.1991 DE 4103174
(43) Veröffentlichungstag der Anmeldung: 12.08.1992
(73) Patentinhaber: Rütgers Aktiengesellschaft, 60326 Frankfurt (DE)
(72) Erfinder: Barth, Volker, Dr., W-6700 Ludwigshafen 29 (DE); Härtner, Helmut, Dr., W-6940 Weinheim (DE)
(74) Vertreter: Patentanwälte Zellentin & Partner

(56) Entgegenhaltungen:
- EP-A- 0 355 316

## Beschreibung

Die Erfindung betrifft wassermischbare, insektizide Mittel, deren umweltbelastendes Potential sehr gering ist.

Aus DE-A 38 27 721 sind Holzschutzmittel bekannt, die als wesentlichen Wirkstoff polymere quartäre Ammoniumborate enthalten und die eine sehr gute Wirksamkeit gegen Pilze, insbesondere gegen Bläue- und Schimmelpilze haben.

Überraschenderweise wurde gefunden, daß die polymeren quartären Ammoniumborate ebenfalls eine gute insektizide Wirkung haben, obwohl sie für Warmblütler nahezu untoxisch sind. Darüberhinaus sind die insektizid wirksamen Konzentrationen sehr gering. Insbesondere überraschend ist ihre gute Wirksamkeit gegen Termiten, wenn sie als sog. Fraßgift eingesetzt werden. Im Vergleich zu anderen gegen Termiten eingesetzten Fraßgiften wird beim Einsatz von polymeren quartären Ammoniumboraten kein "Lerneffekt" der Termiten beobachtet, d. h., auch nachfolgende Termiten fressen ungeachtet bereits vergifteter Termiten weiterhin mit dem erfindungsgemäßen Mittel präparierte Stoffe.

Die polymeren quartären Ammoniumborate sind sowohl mit organischen Lösemitteln als auch mit Wasser verträglich. Zudem sind sie durch in der Natur vorkommende Mikroorganismen abbaubar. Die sie enthaltenen Mittel können somit wäßrige Mikroemulsionen oder Lösungen sein, die als solche direkt auf die Pflanzen, auf den Boden oder sonstige Untergründe aufgebracht werden können. Da sie in geringer Konzentration verteilt sind, können sie innerhalb weniger Tage biologisch abgebaut werden und stellen somit keine Umweltbelastung dar.

Die polymeren quartären Ammoniumborate sind nicht verdampfbar. Eine unkontrollierte Schädigung oder Belastung über die Luft ist somit ausgeschlossen. Sie haben zudem eine hohe Affinität zu mineralischen Substanzen, d. h. ein Auswaschen von mit ihnen behandeltem Boden oder ein Eindringen in tiefere Bodenschichten ist nicht möglich. Sie bleiben an der Oberfläche des Bodens verteilt bis sie biologisch abgebaut sind. Darüberhinaus bleiben sie auch auf anderen Untergründen, wie z. B. auf Fliesen oder PVC-Böden gut haften und werden nicht durch einfaches Abwaschen mit Wasser entfernt. Daraus ergibt sich eine ortsstabile Langzeitwirkung.

Die Mittel sind stark oberflächenaktiv. Sie können daher leicht wasserabweisende Schutzschichten gewisser Insekten wie z. B. von Schildläusen durchdringen.

Die erfindungsgemäßen Mittel sind bevorzugt wäßrige Lösungen oder Mikroemulsionen, die 0,05 bis 5 Gew.-%, bevorzugt 0,5 bis 2 Gew.-% eines oder mehrerer polymeren quartären Ammoniumborate enthalten. Sie können darüberhinaus noch weitere Biozide enthalten, wodurch das Wirkungsspektrum vergrößert wird.

Die Wirkungsart der Mittel ist von der Konzentration des Wirkstoffes abhängig. Es wurde gefunden, daß die Mittel bei einem Gehalt von 0,05 bis 1 Gew.-% an polymeren quartären Ammoniumverbindungen vorwiegend als Fraßgift wirken. Bei höheren Konzentrationen als 1 % tritt die Wirkung als Kontaktgift in den Vordergrund.

Die polymeren quartären Ammoniumborate werden erhalten durch gleichzeitige Umsetzung von Aminen der allgemeinen Formeln I oder II 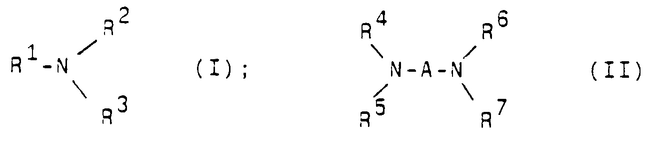
mit 2 bis 20, vorzugsweise 3 bis 10, Mol Ethylen- oder Propylenoxid und 0,6 bis 1,5, vorzugsweise 1 Mol Borsäure, Borsäureestern oder Salze der Borsäure, jeweils pro Mol Stickstoffequivalent, wobei R¹C₈-C₂₂-Alkyl oder C₈-C₂₂-Alkenyl bedeutet oder, wenn R² und R³ Gruppen der Formel -(C₂H₄O)ₓH oder -(C₃H₆O)ₓH darstellen, R¹ auch C₁ auch C₁-C₄-Alkyl bedeuten kann, R² Wasserstoff, C₁-C₂₂-Alkyl oder eine Gruppe der Formeln -(C₂H₄O)ₓH, -(C₃H₆O)ₓH oder -CH₂CH₂CH₂NH₂ bedeutet,
R³ Wasserstoff oder eine Gruppe der Formeln -(C₂H₄O)ₓH, -(C₃H₆O)ₓH oder -CH₂CH₂CH₂NH₂ bedeutet,
R⁴ und R⁶ C₁-C₄-Alkyl oder eine Gruppe der Formel -(C₂H₄O)ₓH oder -(C₃H₆O)ₓ bedeuten,
R⁵ und R⁷ eine Gruppe der Formel -(C₂H₄O)ₓH oder -(C₃H₆O)ₓH,
A eine Gruppe der Formeln -(CH₂)ₙ-, -(CH₂CH₂OCH₂CH₂)ₙ- oder -(CH₂CH₂NHCH₂CH₂)ₙ,
x Zahlen von 1 bis 55 und n eine ganze Zahl von 1 bis 20 bedeuten.

Als Amine der obigen Formeln sind folgende bevorzugt:
1. Amine der Formel I, wobei R¹ C₈-C₂₂-Alkyl, R² C₈-C₂₂-Alkyl oder C₁-C₄-Alkyl und R³ Wasserstoff oder eine Gruppe der Formel -(C₂H₄O)ₓH oder -(C₃H₆O)ₓH bedeuten.
2. Amine der Formel I, wobei R¹ C₈-C₂₂-Alkyl und R² und R³ Wasserstoff bedeuten.
3. Amine der Formel I, wobei R¹ C₁-C₄-Alkyl oder C₈-C₂₂-Alkyl und R² und R³ Gruppen der Formeln -(C₂H₄O)ₓH oder -(C₃H₆O)ₓH bedeuten, wobei die Summe der Ethylenoxid-Gruppen in beiden Resten R² und R³ 2 bis 20 beträgt.
4. Amine der Formel I, wobei R¹ C₈-C₂₂-Alkyl, R² Wasserstoff oder eine Gruppe der Formel -CH₂CH₂CH₂NH₂ und R³ eine Gruppe der Formel -CH₂CH₂CH₂NH₂ bedeuten.
5. Amine der Formel II, wobei A, R⁴, R⁵, R⁶ und R⁷ die oben genannten Bedeutungen haben und wobei die Summe aller Ethylenoxidgruppen 4 bis 30 beträgt.

Bei den Alkylenoxid-Gruppen der Formeln -(C₂H₄O)ₓH und -(C₃H₆)ₓH ist die Gruppe der Formel -(C₂H₄O)ₓH bevorzugt. Anstelle der reinen Polyoxethylen- und Polyoxpropylen-Gruppen können auch solche Reste vorhanden sein, die sowohl aus Ethylenoxid- als auch aus Propylenoxid-Einheiten aufgebaut sind.

Die Umsetzung der Amine mit der Borsäure und dem Alkylenoxid erfolgt in der Weise, daß in einem Autoklaven das jeweilige Amin und die Borsäure vorgelegt und das Alkylenoxid zudosiert wird. Die Reaktionstemperatur beträgt im allgemeinen 60 bis 130 °C, vorzugsweise 60 bis 125 °C, insbesondere 60 bis 100 °C. Der Reaktionsdruck beträgt 50 bis 600 kPa. Die Zudosierung des Alkylenoxides unter diesen Reaktionsbedingungen erfolgt über einen Zeitraum von 1 bis 5 Stunden. Zur Nachreaktion wird das Gemisch bei dem angegebenen Druck 3 bis 12 Stunden auf einer Temperatur von 70 bis 120 °C, vorzugsweise 70 bis 100 °C gehalten.

Anstelle der Borsäure können auch deren Ester, wie z. B. Trimethylborsäureester, oder deren Salze, beispielsweise Na-Borat eingesetzt werden.

Die polymeren quartären Ammoniumborate können mit Wasser verdünnt werden; sie sind gut löslich in Glykolen, Glykolethern, Ethern, niederen Alkoholen oder in Mischungen dieser Lösemittel mit Chloroform oder Methylenchlorid.

Nach Beendigung der Reaktion kann die erhaltene Rohlösung der polymeren quartären Ammoniumborate ohne weitere Reinigung und Aufarbeitung als Konzentrat direkt oder gemeinsam mit anderen an sich bekannten Bioziden verwendet werden.

Eine Entfernung der Nebenprodukte ist möglich, in der Praxis jedoch unnötig.

Die erfindungsgemäß eingesetzten polymeren quartären Ammoniumborate sind mit Wasser beliebig verdünnbar, wobei sich stabile Mikroemulsionen bilden können. Sie sind mischbar mit kationischen Tensiden und können gemeinsam mit diesen in wäßrigen Lösungen eingesetzt werden, d. h., die oben erwähnten Konzentrate können entweder direkt mit Wasser bis zu den gewünschten Konzentrationen verdünnt werden, wobei sich stabile Mikroemulsionen bilden, oder aber nach Zusatz von 5 bis 10 % von an sich bekannten kationischen Tensiden mit Wasser zu Lösungen mit dem gewünschten Wirkstoffgehalt verdünnt werden.

### Beispiel 1:

Handelsübliches Filterpapier wird mit einer wäßrigen Mikroemulsion aus 0,65 Gew.-% polymeren quartären Ammoniumborat (hergestellt gemäß Beispiel 1 der DE-A 38 27 721) getränkt und anschließend getrocknet.

Das so präperierte Papier wird als Fraßköder für Termiten eingesetzt und von diesen angenommen. Die Termiten sterben etwa 30 min nach Aufnahme des Mittels. Weitere Termiten fressen dessen ungeachtet weiterhin von dem erfindungsgemäßen Fraßköder.

### Beispiel 2:

Eine gebräuchliche Lösung eines handelsüblichen Teppichshampoos wird mit polymeren quartären Ammoniumborat (hergestellt gemäß Beispiel 1 der DE-A 38 27 721) vermischt, so daß die Konzentration an polymeren quartären Ammoniumborat 2 % beträgt.

Mit dieser Shampoomischung wird mit Hausmilben verseuchter Teppichboden in an sich üblicher Weise gereinigt. Nach dem Trocknen werden keine lebenden Hausmilben mehr festgestellt.

### Beispiel 3:

Eine mit Läusen befallene Zierpflanze wird mit einer wäßrigen Mikroemulsion besprüht, die 1 Gew.-% eines polymeren quartären Ammoniumborats (hergestellt nach Beispiel 1 der DE-A 38 27 721) enthält.

Nach etwa 10 min fallen die Läuse tot von den befallenen Blättern. Die Pflanze erleidet keine Schädigung.

### Beispiel 4:

Probekörper aus Kiefernsplintholz werden gemäß EN 117 mit wäßrigen Lösungen verschiedener Konzentrationen eines polymeren quartären Ammoniumborats (hergestellt nach Beispiel 1 der DE-A-38 27 721) getränkt und getrocknet. Die Probehölzer werden dann gemäß EN 117 auf ihre Wirksamkeit gegen die Termite Reticulitermes santonensis (je Ansatz 250 Arbeiter, 1 Soldat und 1 Nymphe) getestet.

Die Ergebnisse sind in der folgenden Tabelle zusammengefaßt:

| Probenbezeichüberlebene | Lösungsaufnahme | Schutzmittelaufnahme | | Ergebnis der Auswertung nung | | *Bewertung |
|---|---|---|---|---|---|---|
| | je Probeholz [g] | je Probeholz [kg/m³] | mittlere [kg/m³] | Arbeiter % abgerundet | Soldaten (S) oder Nymphen (N) | |
| unbehandelte Kontrollproben | | | | | | |
| | 0 | 0 | | 68 | S/N | 4 |
| | 0 | 0 | 0 | 59 | S/N | 4 |
| | 0 | 0 | | 54 | S/N | 4 |
| 1 %ige Lösung | 14,2 | 7,6 | | 0 | S/N | 2 |
| | 14,3 | 7,6 | 7,6 | 0 | S/N | 3 |
| | 14,2 | 7,6 | | 0 | S/N | 3 |
| 2 %ige Lösung | 14,2 | 15,2 | | 0 | S/N | 2 |
| | 14,3 | 15,2 | 15,2 | 0 | S/N | 2 |
| | 14,2 | 15,2 | | 0 | S/N | 2 |
| 3 %ige Lösung | 14,3 | 22,8 | | 0 | S/N | 0 |
| | 14,1 | 22,5 | 22,7 | 0 | S/N | 0-1 |
| | 14,3 | 22,8 | | 0 | S/N | 1 |

| | | | | | | |
|---|---|---|---|---|---|---|
| *Bewertungsstufen: 0 = kein Angriff 1 = Nagespuren 2 = leichter Angriff 3 = mittlerer Angriff 4 = starker Angriff | | | | | | |

## Patentansprüche

1. Verwendung von polymerem quartärem Ammoniumborat, erhalten durch gleichzeitige Umsetzung von Aminen der allgemeinen Formeln I oder II 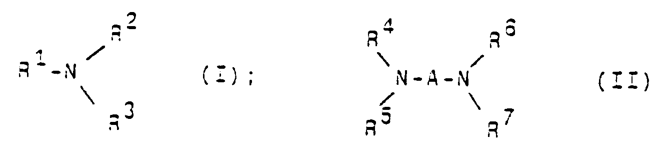 mit 2 bis 20, vorzugsweise 3 bis 10, Mol Ethylen- oder Propylenoxid und 0,6 bis 1,5, vorzugsweise 1 Mol Borsäure, Borsäureestern oder Salzen der Borsäure, jeweils pro Mol Stickstoffequivalent, wobei R¹C₈-C₂₂-Alkyl oder C₈-C₂₂-Alkenyl bedeutet oder, wenn _{R}2 _{und R}3 Gruppen der Formel -(C₂H₄O)ₓH oder -(C₃H₆O)ₓH darstellen, R¹ auch C₁-C₄-Alkyl bedeuten kann,
R² Wasserstoff, C₁-C₂₂-Alkyl oder eine Gruppe der Formeln -(C₂H₄O)ₓH, -(C₃H₆O)ₓH oder -CH₂CH₂CH₂NH₂ bedeutet,
R³ Wasserstoff oder eine Gruppe der Formeln -(C₂H₄O)ₓH, -(C₃H₆O)ₓH oder -CH₂CH₂CH₂NH₂ bedeutet,
R⁴ und R⁶ C₁-C₄-Alkyl oder eine Gruppe der Formel -(C₂H₄O)ₓH oder -(C₃H₆O)ₓH bedeuten,
R⁵ und R⁷ eine Gruppe der Formel -(C₂H₄O)ₓH oder -(C₃H₆O)ₓH,
A eine Gruppe der Formeln -(CH₂)ₙ-, -(CH₂CH₂OCH₂CH₂)ₙ- oder -(CH₂CH₂NHCH₂CH₂)ₙ,
x Zahlen von 1 bis 55 und n eine ganze Zahl von 1 bis 20 bedeuten, zur Herstellung von insektiziden Mitteln.

2. Verwendung nach Anspruch 1, wobei das polymere quarternäre Ammoniumborat mit Wasser verdünnt ist.

3. Verwendung nach den Ansprüchen 1 und 2, wobei das polymere quartäre Ammoniumborat in einer Konzentration von 0,05 bis 5 Gew.-% vorliegt.

4. Verwendung nach den Ansprüchen 1 und 2, wobei das polymere quartäre Ammoniumborat in einer Konzentration von vorzugsweise 0,5 bis 2 Gew.-% vorliegt.

5. Verwendung nach den Ansprüchen 1 bis 4, wobei das polymere quartäre Ammoniumborat mit weiteren Bioziden kombiniert ist.

6. Verwendung von polymerem quartärem Ammoniumborat gemäß Anspruch 1 zur Herstellung von insektiziden Mitteln, die als Schutzmittel gegen Termiten eingesetzt werden.

7. Verwendung von polymerem quartärem Ammoniumborat gemäß Anspruch 1 zur Herstellung von insektiziden Mitteln, die als Mittel gegen Hausmilben eingesetzt werden.

## Claims

1. Use of polymer quaternary ammonium borate, obtained by the simultaneous reaction of amines of the general formula I or II: 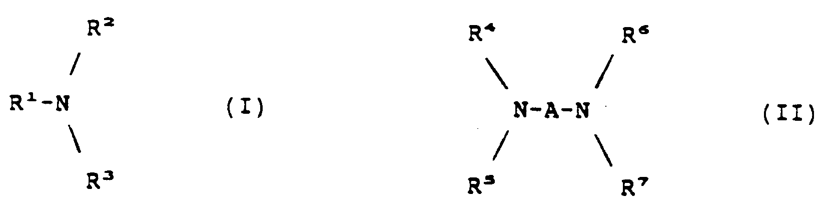 having from 2 to 20, preferably 3 to 10, Mol of ethylene or propylene oxide and from 0·6 to 1·5, preferably 1, Mol of boric acid, boric acid esters or salts of boric acid, in each case *per* Mol of nitrogen equivalent, in which **R¹** represents a C₈ to C₂₂ alkyl or a C₈ to C₂₂ alkenyl or, if **R²** and **R³** represent groups of the formula -(C₂H₄O)ₓH or -(C₃H₆O)ₓH, **R¹** can also represent a C₁ to C₄ alkyl,
**R²** represents hydrogen, a C₁ to C₂₂ alkyl or a group of the formula -(C₂H₄O)ₓH, -(C₃H₆O)ₓH or -CH₂CH₂CH₂NH₂,
**R³** represents hydrogen or a group of the formula -(C₂H₄O)ₓH, -(C₃H₆O)ₓH or -CH₂CH₂CH₂NH₂,
**R⁴** and **R⁶** represent a C₁ to C₄ alkyl or a group of the formula -(C₂H₄O)ₓH or -(C₃H₆O)ₓH,
**R⁵** and **R⁷** [represent] a group of the formula -(C₂H₄O)ₓH or -(C₃H₆O)ₓH,
**A** [represents] a group of the formula -(CH₂)ₙ-, -(CH₂CH₂OCH₂CH₂)ₙ- or -(CH₂CH₂NHCH₂CH₂)ₙ,
**x** represents numbers from 1 to 55, and **n** a whole number from 1 to 20, for the preparation of insecticides.

2. Use according to Claim 1, wherein the polymer quaternary ammonium borate is diluted with water.

3. Use according to Claims 1 and 2, wherein the polymer quaternary ammonium borate is present in a concentration of from 0·05 to 5% by weight.

4. Use according to Claims 1 and 2, wherein the polymer quaternary ammonium borate is present in a concentration of preferably from 0·5 to 2% by weight.

5. Use according to Claims 1 to 4, wherein the polymer quaternary ammonium borate is combined with further biocides.

6. Use of polymer quaternary ammonium borate according to Claim 1 for the preparation of insecticides which are used as pesticides against termites.

7. Use of polymer quaternary ammonium borate according to Claim 1 for the preparation of insecticides which are used as agents against house mites.

## Revendications

1. Utilisation de borate d'ammonium quaternaire polymère obtenu par réaction simultanée d'amines de formule générale I ou II 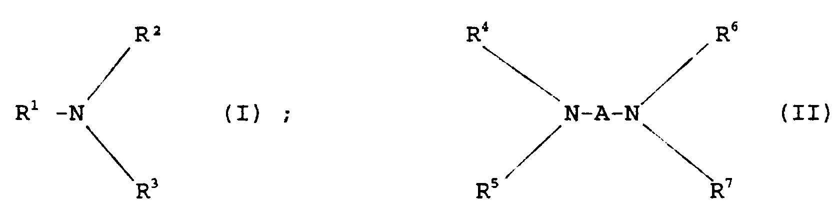 avec 2 jusqu'à 20, de préférence 3 jusqu'à 10 moles d'oxyde d'éthylène ou de propylène et 0,6 jusqu'à 1,5, de préférence 1 mole d'acide borique, d'esters de l'acide borique ou de sels de l'acide borique, respectivement par mole d'équivalent d'azote, où R¹ signifie un alkyle en C₈-C₂₂ ou un alcényle en C₈-C₂₂ ou, lorsque R² et R³ représentent des groupes de la formule -(C₂H₄O)ₓH ou -(C₃H₆O)ₓH, R¹ peut également signifier un alkyle en C₁-C₄, R² signifie l'hydrogène, un alkyle en C₁-C₂₂ ou un groupe de formule -(C₂H₄O)ₓH, -(C₃H₆O)ₓH ou CH₂CH₂CH₂NH₂,
R³ signifie l'hydrogène, un groupe octyle ou un groupe de formule -(C₂H₄O)ₓH, -(C₃H₆O)ₓH ou CH₂CH₂CH₂NH₂,
R⁴ et R⁶ signifient un alkyle en C₁-C₄ ou un groupe de la formule -(C₂H₄O)ₓH ou -(C₃H₆O)ₓH,
R⁵ et R⁷ signifient un groupe de formule -(C₂H₄O)ₓH ou -(C₃H₆O)ₓH,
A un groupe de formule -(CH₂)ₙ-, -(CH₂CH₂OCH₂CH)ₙ ou -(CH₂CH₂NHCH₂CH₂)ₙ,
x signifie des nombres de 1 à 55 et n un nombre entier de 1 à 20, pour la préparation d'agents insecticides.

2. Utilisation selon la revendication 1, moyennant quoi le borate d'ammonium quaternaire polymère est dilué avec de l'eau.

3. Utilisation selon les revendications 1 et 2, moyennant quoi le borate d'ammonium quaternaire polymère est présent à une concentration de 0,05 à 5% en poids.

4. Utilisation selon les revendications 1 et 2, moyennant quoi le borate d'ammonium quaternaire polymère est présent à une concentration de préférence de 0,5 à 2% en poids.

5. Utilisation selon les revendications 1 à 4, moyennant quoi le borate d'ammonium quaternaire polymère est combiné avec d'autres biocides.

6. Utilisation de borate d'ammonium quaternaire polymère selon la revendication 1 pour la préparation d'agents insecticides qui sont mis en oeuvre en tant qu'agents de protection contre les termites.

7. Utilisation de borate d'ammonium quaternaire polymère selon la revendication 1 pour la préparation d'agents insecticides qui sont mis en oeuvre en tant qu'agents contre les acariens.
